# EUROPÄISCHE PATENTSCHRIFT

(11) **EP 4 602 573 B1**
(45) Veröffentlichungstag und Bekanntmachung des Hinweises auf die Patenterteilung: **09.12.2026**
(21) Anmeldenummer: 23750579.7
(22) Anmeldetag: 26.07.2023
(51) Int. Cl.: B60W 30/18, G06V 20/56, G08G 1/16

(54) **VORRICHTUNG UND VERFAHREN ZUM BETRIEB EINES FAHRZEUGS**
APPARATUS AND METHOD FOR OPERATING A VEHICLE
DISPOSITIF ET PROCEDE DE FONCTIONNEMENT D'UN VEHICULE

(30) Priorität: 10.10.2022 DE 102022126231
(43) Veröffentlichungstag der Anmeldung: 20.08.2025
(73) Patentinhaber: Daimler Truck AG, 70771 Leinfelden-Echterdingen (DE)
(72) Erfinder: STEIN, Fridtjof, 70771 Leinfelden-Echterdingen (DE)
(74) Vertreter: JENSEN & SON
(86) Internationale Anmeldenummer: PCT/EP2023/070700
(87) Internationale Veröffentlichungsnummer: WO 2024/078763

(56) Entgegenhaltungen:
- DE-A1- 102014 018 364
- US-A1- 2002 005 778

## Beschreibung

Die Erfindung betrifft eine Vorrichtung zum Betrieb eines Fahrzeugs gemäß dem Oberbegriff des Anspruchs 1 und ein Verfahren zum Betrieb eines Fahrzeugs gemäß dem Oberbegriff des Anspruchs 5.

Für das autonome Fahren von Fahrzeugen, beispielsweise Nutzfahrzeugen, ist die Wahrnehmung und die Vermessung der Umgebung zwingend notwendig. Dafür werden typischerweise Sensoren wie Lidar, Kameras, Radar und Ultraschall eingesetzt.

Eine große Herausforderung bei autonomen Nutzfahrzeugen ist der Spurwechsel oder das Einfädeln. Dabei muss durch einen Blick nach hinten mittels mindestens einer Kamera ermittelt werden, ob eine Zielspur frei für einen Spurwechsel ist. Dies wird durch die Abschattung des Blickfeldes der Kamera durch einen oder mehrere Anhänger und/oder Auflieger des Nutzfahrzeugs erschwert.

Die Entfernung nach hinten, die von der Kamera zu überwachen ist, hängt von der Verkehrssituation ab. Bei einem Spurwechsel im rollenden Verkehr ist der zu überwachende Bereich relativ kurz. Beim Einfädeln von einer Auffahrt auf eine Autobahn mit einer geringen Anfangsgeschwindigkeit ist die maximale Entfernung im zu überwachenden Bereich hingegen groß. Der genaue Bereich hängt dabei von der maximalen Eigenbeschleunigung, die auch von der Beladung abhängig ist, und der maximalen Geschwindigkeit anderer Verkehrsteilnehmer ab. Nutzfahrzeuge haben oft eine relativ geringe Beschleunigung, so dass es relativ lange dauert, bis sie die Geschwindigkeit des fließenden Verkehrs erreicht haben und sich daher in den Verkehr einfädeln können, ohne diesen zu behindern oder zu gefährden.

EP 2 555 178 B1 beschreibt ein Verfahren zum Erfassen von Objekten seitlich eines Nutzfahrzeugs, wobei zumindest die folgenden Schritte ausgeführt werden:
- mit mindestens einer Kamera werden in einem an einer Seite eines Nutzfahrzeugs liegenden Sektor befindliche Objekte erfasst;
- in einer Auswerteeinheit werden die erfassten Objekte bewertet, wobei eine Lage der erfassten Objekte relativ zum Nutzfahrzeug ermittelt und eine Kollisionsgefahr mit dem Nutzfahrzeug bewertet wird; und
- an eine Wiedergabeeinheit wird im Falle einer Kollisionsgefahr von der Auswerteeinheit eine Information übermittelt, auf die hin die Wiedergabeeinheit ein Warnsignal ausgibt. Weiterhin wird ein Nutzfahrzeug beschrieben, aufweisend ein Erfassungssystem zum Ausführen des Verfahrens, wobei das Erfassungssystem mindestens eine Kamera aufweist, die an einer Seite des Nutzfahrzeugs anordbar ist, sowie eine Auswerteeinheit und mindestens eine Wiedergabeeinheit. Mit diesem Verfahren wird der Führer eines Nutzfahrzeugs in Hinsicht auf die Relevanz von Objekten entlastet.

Aus der DE 10 2014 018 364 A1 sind eine Vorrichtung sowie ein Verfahren zur Unterstützung eines Fahrers eines Fahrzeugs mit einer, in Fahrzeug-Querrichtung gesehen, seitlich außen an einer ersten Außenseite des Fahrzeugs angeordneten ersten Bild-Erfassungseinrichtung und einer gegenüberliegend zu der ersten Außenseite an einer zweiten Außenseite des Fahrzeugs angeordneten zweiten Bild-Erfassungseinrichtung bekannt. Mittels jeder Bild-Erfassungseinrichtung ist jeweils ein, in Fahrzeug-Querrichtung gesehen, seitlich neben dem Fahrzeug und, in Fahrzeuglängsrichtung gesehen, hinter einem Fahrer des Fahrzeugs liegender Fahrstreckenbereich bildlich und/oder filmisch erfassbar. Eine Anzeigeeinrichtung zeigt dem Fahrer zumindest einen Teil des erfassten Fahrstreckenbereichs an. Weiterhin ist eine datenübertragend mit den Bild-Erfassungseinrichtungen verbundene Objektermittlungseinrichtung vorgesehen, mittels der aus den Aufnahmen der Bild-Erfassungseinrichtungen die Positionen von in den mittels der der Bild-Erfassungseinrichtungen erfassten Fahrstreckenbereichen befindlichen Objekten relativ zu dem Fahrzeug ermittelbar sind.

Der Erfindung liegt die Aufgabe zu Grunde, eine neuartige Vorrichtung zum Betrieb eines Fahrzeugs sowie ein neuartiges Verfahren zum Betrieb eines Fahrzeugs anzugeben.

Die Aufgabe wird erfindungsgemäß gelöst durch eine Vorrichtung zum Betrieb eines Fahrzeugs mit den Merkmalen des Anspruchs 1 und durch ein Verfahren zum Betrieb eines Fahrzeugs mit den Merkmalen des Anspruchs 5.

Vorteilhafte Ausgestaltungen der Erfindung sind Gegenstand der Unteransprüche.

Eine erfindungsgemäße Vorrichtung zum Betrieb eines Fahrzeugs, insbesondere eines Nutzfahrzeugs, umfassend eine Zugmaschine und mindestens einen Auflieger oder Anhänger, umfasst eine linke Kamera an einer linken Seite der Zugmaschine und eine rechte Kamera an einer rechten Seite der Zugmaschine, deren Frustum jeweils entgegen einer Fahrtrichtung gerichtet ist und das Frustum der jeweils anderen Kamera überschneidet, wobei eine Basisbreite der Kameras größer einstellbar ist als eine Breite des Aufliegers oder Anhängers, wobei die Vorrichtung zur Vermessung eines von beiden Kameras erfassten Stereo-Messbereichs auf Basis von Bilddaten der Kameras mittels Triangulation konfiguriert ist. Erfindungsgemäß ist die Vorrichtung dazu konfiguriert, Spurwechsel des Fahrzeugs zu planen und durch Ansteuern von Aktoren des Fahrzeugs auszuführen, wenn eine Verkehrssituation im erfassten Stereo-Messbereich dies zulässt. Es ist vorteilhaft, die Basisbreite so groß wie möglich zu wählen.

Durch die Anordnung einer Kamera links vom Fahrerhaus und einer Kamera rechts vom Fahrerhaus wird eine bestmögliche Überwachung des rückwärtigen Verkehrsraums ermöglicht, da sich anderenfalls eine Eigenverdeckung durch das Fahrzeuggespann ergibt und die entsprechenden Linkskurven und/oder Rechtskurven nicht einsehbar sind. Ansätze, die auf einer Monokamera basieren, können kein physikalisches Messprinzip wie die Triangulation zur Entfernungsmessung benutzen, da sie lediglich über Annahmen und semantische Analyse (wie Deep Learning) Entfernungen schätzen können, die entsprechend fehlerbehaftet sind.

Das Nutzfahrzeug, insbesondere der Auflieger oder Anhänger, generiert für beide Kameras einen toten Winkel durch Eigenverdeckung. Abhängig von einem jeweiligen seitlichen Abstand der Kameras vom Auflieger wird der Bereich des toten Winkels kleiner und es gibt einen Stereo-Messbereich, den beide Kameras sehen. Damit wird das Vermessen des Stereo-Messbereichs mittels Stereo-Triangulation ermöglicht.

In einer Ausführungsform sind die Kameras zumindest bedarfsweise ausfahrbar an der Zugmaschine angeordnet, beispielsweise jeweils mittels motorisch ausfahrbarer Halterungen. Wenn die Kameras ausfahrbar sind, dann kann die Vermessung durch Vergrößerung der Basisbreite weiter verbessert werden. Ein solches Ausfahren der Kameras ist auch temporär möglich, insbesondere dann, wenn Vermessungsbedarf besteht.

In einer Ausführungsform sind die Kameras zum Empfang von Licht im sichtbaren Wellenlängenbereich und/oder im Infrarotbereich ausgebildet. Letztere Option ist insbesondere nachts von Vorteil.

Erfindungsgemäß ist die Basisbreite durch Ausfahren der Kameras auf mehr als 3m einstellbar. Dank einer großen Basisbreite von beispielsweise mehr als 3m sind messtechnisch besonders relevante Werte ermittelbar.

In einer Ausführungsform ist mindestens ein weiterer Sensor zur Beobachtung der Umgebung hinter dem Fahrzeug vorgesehen, der als ein Radarsensor und/oder als ein Lidarsensor ausgebildet ist, wobei die Vorrichtung dazu konfiguriert ist, Bilddaten der Kameras mit Daten des mindestens einen weiteren Sensors zu fusionieren und der Planung und Ausführung von Spurwechseln zugrunde zu legen.

Gemäß einem Aspekt der vorliegenden Erfindung wird ein Verfahren zum Betrieb eines Fahrzeugs, insbesondere eines Nutzfahrzeugs, vorgeschlagen, insbesondere mittels der oben beschriebenen Vorrichtung, wobei das Fahrzeug eine Zugmaschine und mindestens einen Auflieger oder Anhänger aufweist, wobei eine linke Kamera an einer linken Seite der Zugmaschine und eine rechte Kamera an einer rechten Seite der Zugmaschine vorgesehen ist, deren Frustum jeweils entgegen einer Fahrtrichtung gerichtet ist und das Frustum der jeweils anderen Kamera überschneidet, wobei eine Basisbreite der Kameras größer ist oder größer eingestellt wird als eine Breite des Aufliegers oder Anhängers, wobei auf Basis von Bilddaten der Kameras ein von beiden Kameras erfasster Stereo-Messbereich mittels Triangulation vermessen wird, wobei Spurwechsel des Fahrzeugs geplant und durch Ansteuern von Aktoren des Fahrzeugs ausgeführt werden, wenn eine Verkehrssituation im erfassten Stereo-Messbereich dies zulässt.

In einer Ausführungsform werden eine maximale Ausfahrweite der linken Kamera und eine maximale Ausfahrweite der rechten Kamera auf Basis einer Fahrsituation und einer Eigengeschwindigkeit des Fahrzeugs bestimmt und eingestellt. Auf Basis der Ausfahrweiten sowie der bekannten Breite des Aufliegers oder Anhängers wird die Basisbreite zur Berechnung der Triangulation aktualisiert.

Erfindungsgemäß wird ein Winkel bestimmt, um den der Auflieger oder Anhänger relativ zu einer Längsachse der Zugmaschine geschwenkt ist, wobei die Triangulation durchgeführt wird, wenn der Absolutwert des Winkels kleiner ist als ein vorgegebener maximaler Schwenkwinkel. Insbesondere wird die Triangulation und/oder ein Spurwechsel anderenfalls nicht durchgeführt.

In einer Ausführungsform werden zur Einschätzung, ob die Verkehrssituation einen Spurwechsel zulässt, im Stereo-Messbereich sich nähernde Objekte, deren Entfernung vom Fahrzeug und deren Trajektorie relativ zum Fahrzeug ermittelt. In einer Ausführungsform wird dabei ferner eine Relativgeschwindigkeit zwischen dem Fahrzeug und dem sich nähernden Objekt geschätzt und berücksichtigt.

Soweit in der vorliegenden Anmeldung von Spurwechseln die Rede ist, kann sowohl das Einfädeln eines Fahrzeugs von einer Beschleunigungsspur auf einen eigentlichen Verkehrsweg als auch das normale Wechseln des Fahrzeugs zwischen Spuren auf einem mehrspurigen Fahrweg gemeint sein.

Der Ansatz gemäß der vorliegend beschriebenen Lösung ist nicht nur für Nutzfahrzeuggespanne, sondern auch für andere Fahrzeuge, beispielsweise PKW, PKW-Gespanne, Pickup-Trucks oder Busse, insbesondere Gelenkbusse, anwendbar.

Ausführungsbeispiele der Erfindung werden im Folgenden anhand von Zeichnungen näher erläutert.

Dabei zeigen:
- Fig. 1: eine schematische Detailsicht eines Nutzfahrzeugs, umfassend eine Zugmaschine und einen Auflieger,
- Fig. 2: eine schematische Ansicht des Nutzfahrzeugs, wobei der Auflieger gerade zur Zugmaschine ausgerichtet ist,
- Fig. 3: eine schematische Ansicht des Nutzfahrzeugs, wobei der Auflieger ungerade zur Zugmaschine ausgerichtet ist,
- Fig. 4: eine schematische Ansicht des Aufliegers mit einem Stereo-Messbereich der Kameras und einem toten Winkel, wobei der Auflieger gerade zur Zugmaschine ausgerichtet ist,
- Fig. 5: ein schematisches Diagramm zur Veranschaulichung des Zusammenhangs zwischen der Länge x und dem seitlichen Abstand der Kameras vom Auflieger,
- Fig. 6: eine schematische Ansicht des Aufliegers mit einem Stereo-Messbereich der Kameras und einem toten Winkel, wobei der Auflieger ungerade zur Zugmaschine ausgerichtet ist,
- Fig. 7: eine weitere schematische Ansicht des Aufliegers in der Situation aus Figur 6,

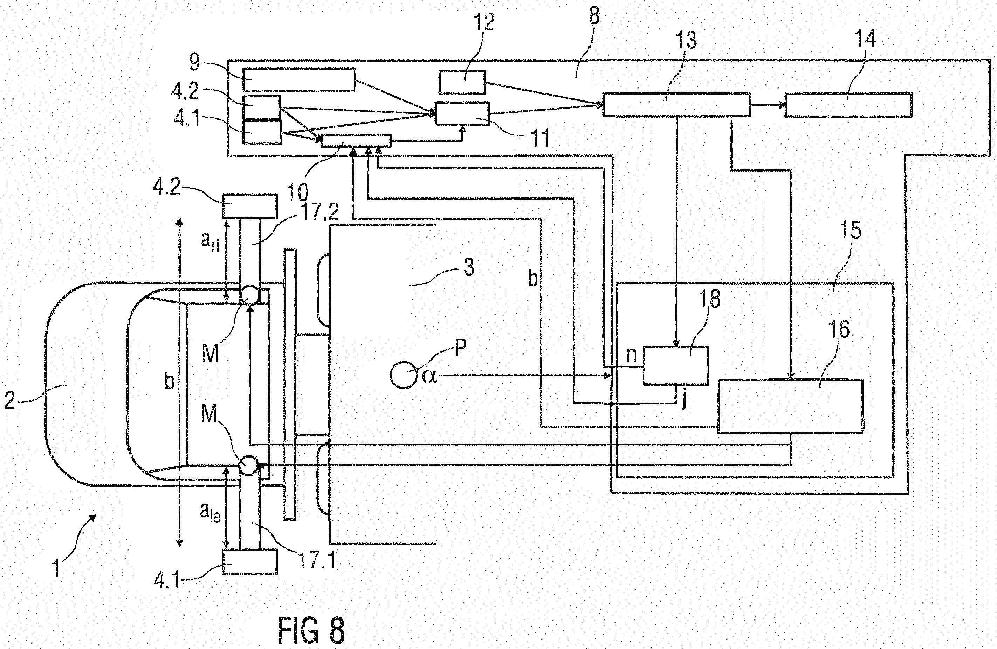

- Fig. 8: eine schematische Ansicht einer Vorrichtung zur Bewertung einer Verkehrssituation hinter dem Nutzfahrzeug.

Einander entsprechende Teile sind in allen Figuren mit den gleichen Bezugszeichen versehen.

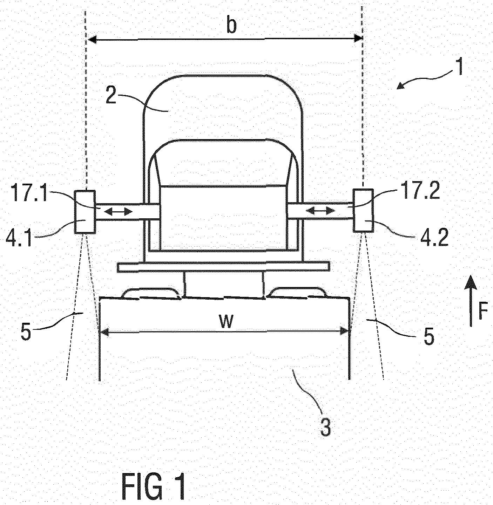

Figur 1 ist eine schematische Detailsicht eines Fahrzeugs 1, insbesondere Nutzfahrzeugs 1, umfassend eine Zugmaschine 2 und einen Auflieger 3. In anderen Ausführungsbeispielen kann statt des Aufliegers 3 mindestens ein Anhänger vorgesehen sein.

An einer linken Seite und an einer rechten Seite der Zugmaschine 2 ist jeweils eine Kamera 4.1, 4.2 angeordnet, deren Frustum 5 entgegen einer Fahrtrichtung F, das heißt nach hinten, gerichtet ist.

Die Kameras 4.1, 4.2 können fest oder ausfahrbar an der Zugmaschine 2 angeordnet sein, beispielsweise jeweils mittels einer festen oder ausfahrbaren Halterung 17.1, 17.2.

Die Kameras 4.1, 4.2 können zum Empfang von Licht im sichtbaren Wellenlängenbereich und/oder im Infrarotbereich (Wärmebildkameras) ausgebildet sein. Letztere Option ist nachts von Vorteil.

Eine Basisbreite b der Kameras 4.1, 4.2, das heißt deren Abstand voneinander muss größer sein als eine Breite w des Aufliegers 3 beziehungsweise des Anhängers. Es ist vorteilhaft, die Basisbreite b so groß wie möglich zu wählen.

Durch die Anordnung einer Kamera 4.1 links vom Fahrerhaus und einer Kamera 4.2 rechts vom Fahrerhaus wird eine bestmögliche Überwachung des rückwärtigen Verkehrsraums ermöglicht, da sich anderenfalls eine Eigenverdeckung durch das Fahrzeuggespann ergibt und die entsprechenden Linkskurven und/oder Rechtskurven nicht einsehbar sind. Ansätze, die auf einer Monokamera basieren, können kein physikalisches Messprinzip wie die Triangulation zur Entfernungsmessung benutzen, da sie lediglich über Annahmen und semantische Analyse (wie Deep Learning) Entfernungen schätzen können, die entsprechend fehlerbehaftet sind.

Das Nutzfahrzeug 1 (Gespann), insbesondere der Auflieger 3 oder Anhänger, generiert für beide Kameras 4.1, 4.2 einen toten Winkel 7 durch Eigenverdeckung. Abhängig von einem jeweiligen seitlichen Abstand a der Kameras 4.1, 4.2 vom Auflieger 3 wird der Bereich des toten Winkels 7 kleiner und es gibt einen Stereo-Messbereich 6, den beide Kameras 4.1, 4.2 sehen. Damit wird das Vermessen des Stereo-Messbereichs 6 mittels Stereo-Triangulation ermöglicht. Dank einer großen Basisbreite b von beispielsweise mehr als 3m sind messtechnisch besonders relevante Werte ermittelbar.

Wenn die Kameras 4.1, 4.2 zudem ausfahrbar sind, dann kann die Vermessung weiter verbessert werden. Ein solches Ausfahren der Kameras 4.1, 4.2 ist auch temporär möglich, insbesondere dann, wenn Vermessungsbedarf besteht.

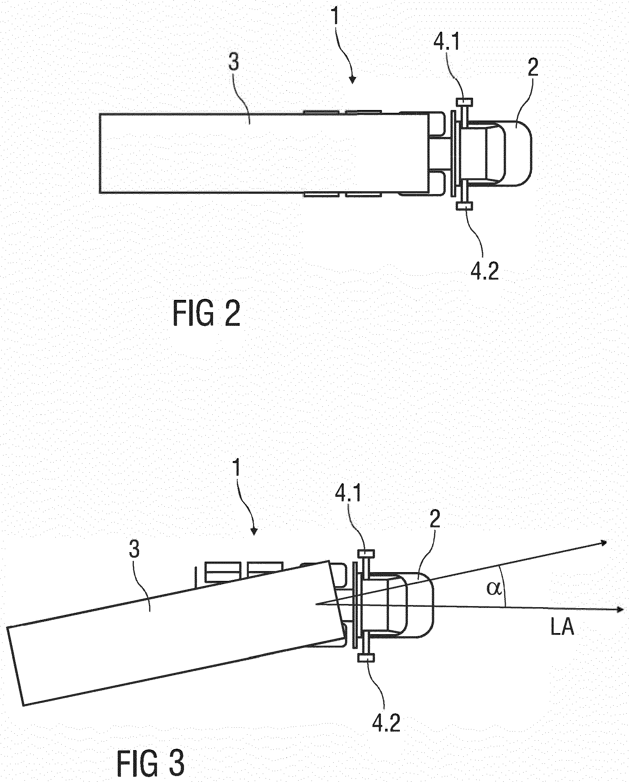

Figur 2 ist eine schematische Ansicht des Nutzfahrzeugs 1, wobei der Auflieger 3 gerade zur Zugmaschine 2 ausgerichtet ist. Figur 3 ist eine schematische Ansicht des Nutzfahrzeugs 1, wobei der Auflieger 3 ungerade, das heißt unter einem Winkel α, zu einer Längsachse LA der Zugmaschine 2 ausgerichtet ist. Dabei ist der Winkel α ungleich Null.

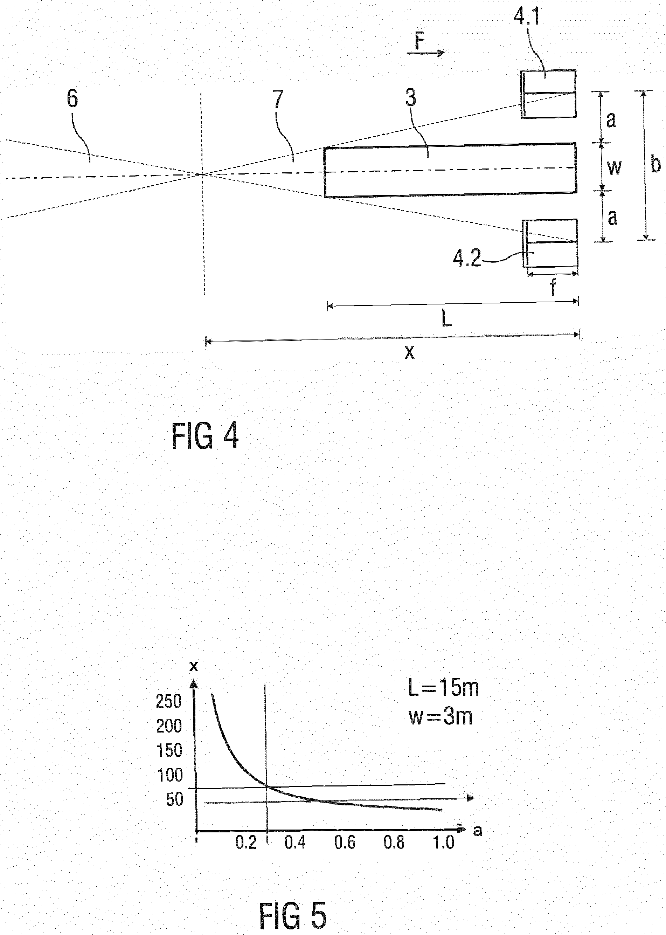

Figur 4 ist eine schematische Ansicht des Aufliegers 3 mit einem Stereo-Messbereich 6 der Kameras 4.1, 4.2 und einem toten Winkel 7, wobei der Auflieger 3 gerade zur Zugmaschine 2 ausgerichtet ist. Die Basisbreite b entspricht der Summe der Breite w des Aufliegers 3 und der jeweiligen seitlichen Abstände a der Kameras 4.1, 4.2 vom Auflieger 3. Der tote Winkel 7 entsteht durch Abschattung des Frustums 5 durch den Auflieger 3 und beginnt an dessen bezogen auf die Fahrtrichtung F hinterem Ende. Ausgehend von einem bezogen auf die Fahrtrichtung F vorderen Ende des Aufliegers 3 endet der tote Winkel 7 bei einer Länge x hinter dem Auflieger 3. Hierfür gelten folgende Zusammenhänge: $\frac{x}{x - L} = \frac{a + \frac{W}{2}}{\frac{W}{2}} ,$ $x = \frac{L w}{2 a} + L ,$ wobei L die Länge des Aufliegers 3 ist.

Der Stereo-Messbereich 6 beginnt bei der Länge x und setzt sich entgegen der Fahrtrichtung F fort.

Figur 5 ist ein schematisches Diagramm zur Veranschaulichung des Zusammenhangs zwischen der Länge x und dem seitlichen Abstand a der Kameras 4.1, 4.2 vom Auflieger 3. Die volle Breite einer Fahrspur, auf der das Nutzfahrzeug 1 fährt, ist bei einer Länge x₂ ≈ 2 x zu sehen.

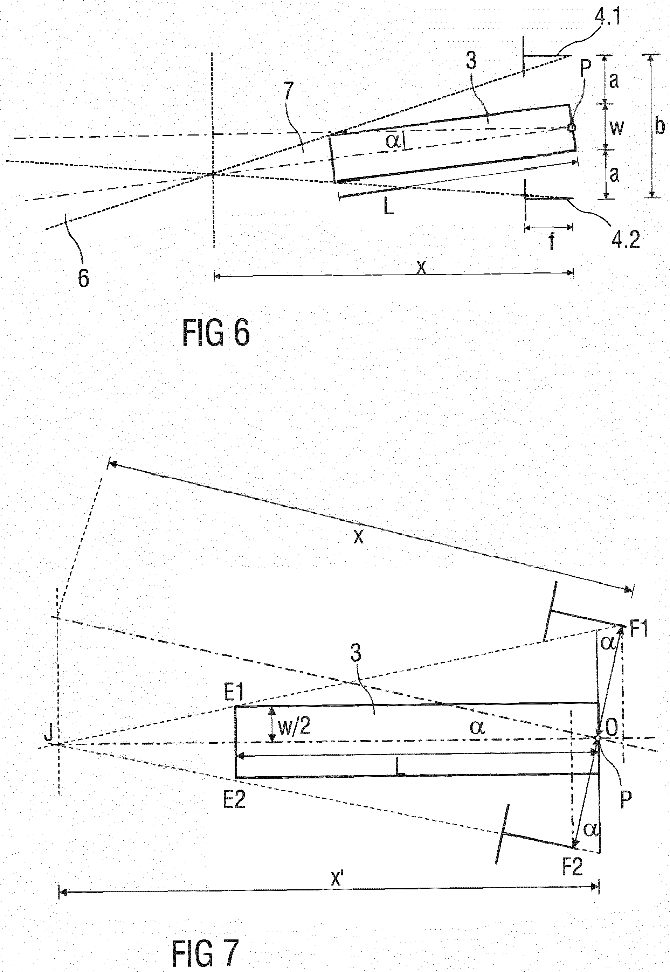

Figur 6 ist eine schematische Ansicht des Aufliegers 3 mit einem Stereo-Messbereich 6 der Kameras 4.1, 4.2 und einem toten Winkel 7, wobei der Auflieger 3 ungerade, das heißt unter einem Winkel ∝≠ 0 zur Zugmaschine 2 ausgerichtet ist. Figur 7 ist eine weitere schematische Ansicht des Aufliegers 3 in dieser Situation. Die Basisbreite b entspricht der Summe der Breite w des Aufliegers 3 und der jeweiligen seitlichen Abstände a der Kameras 4.1, 4.2 vom Auflieger 3 an einem Punkt P, beispielsweise einem Königszapfen, um den er relativ zur Zugmaschine 2 schwenkt. Der tote Winkel 7 entsteht durch Abschattung des Frustums 5 durch den Auflieger 3 und beginnt an dessen bezogen auf die Fahrtrichtung F hinterem Ende. Ausgehend von einem bezogen auf die Fahrtrichtung F vorderen Ende des Aufliegers 3 endet der tote Winkel 7 bei einer Länge x hinter dem Auflieger 3 in der Verlängerung einer Längsachse LA der Zugmaschine 2. Hierfür gelten folgende Zusammenhänge: $q = a + w / 2 ,$ $E 1 = \left(L,w/2\right) ,$ $E 2 = \left(L,-w/2\right) ,$ $J = \left(x′,0\right) ,$ $F 1 = \left(-sin\left(α\right), cos\left(α\right)\right) ⋅ q ,$ $F 2 = \left(+sin\left(α\right), cos\left(α\right)\right) ⋅ q ,$ $x = cos \left(α\right) ⋅ x ′ ,$ wobei q eine Hilfsgröße ist, E1 und E2 die hinteren Ecken des Aufliegers 3 oder Anhängers repräsentieren, J einen Schnittpunkt als Startpunkt des Stereomessbereichs repräsentiert, F1 der Fokalpunkt der Kamera 4.1 ist, F2 der Fokalpunkt der Kamera 4.2 ist, und x' die Entfernung des Startes des Stereomessbereichs entlang der Achse des Aufliegers 3 oder Anhängers ist. Die Brennweite der Kameras wird mit dem Bezugszeichen f symbolisiert.

Bei größeren Winkeln α ist es möglich, dass der Stereo-Messbereich 6 sich nicht mit dem gewünschten, zu überwachenden Straßenabschnitt überschneidet.

Figur 7 ist eine schematische Ansicht einer Vorrichtung 8 zur Bewertung einer Verkehrssituation hinter dem Nutzfahrzeug 1.

Die Vorrichtung 8 umfasst die linke Kamera 4.1, die rechte Kamera 4.2 und gegebenenfalls mindestens einen weiteren Sensor 9 zur Beobachtung der Umgebung hinter dem Nutzfahrzeug 1, beispielsweise mindestens einen Radarsensor und/oder mindestens einen Lidarsensor. Daten, die von den Kameras 4.1, 4.2 gewonnen werden, werden in einem Stereobild-Modul 10 zur Erstellung eines Stereobilds der Verkehrssituation hinter dem Nutzfahrzeug 1 verarbeitet, beispielsweise mittels Triangulation. Optional ist ein Fusionsmodul 11 vorgesehen, welches das Stereobild mit Daten der weiteren Sensoren 9 zu einem fusionierten Bild der Verkehrssituation hinter dem Nutzfahrzeug 1 verarbeitet. Dieses wird zusammen mit Daten einer digitalen Karte 12 einem Verhaltens- und Planungsmodul 13 bereitgestellt. Das Verhaltens- und Planungsmodul 13 plant Spurwechsel des Nutzfahrzeugs 1 und steuert eine Aktorikregelung 14 an, die dazu konfiguriert ist, Aktoren des Nutzfahrzeugs 1 anzusteuern, um diese Spurwechsel auszuführen. Ferner ist das Verhaltens- und Planungsmodul 13 mit einem rückwärtigen Stereo-Modul 15 gekoppelt, das eine Berechnungseinheit 16 zur Berechnung einer maximalen Ausfahrweite aₗₑ der linken Kamera 4.1 und einer maximalen Ausfahrweite aᵣᵢ der rechten Kamera 4.2 auf Basis einer Fahrsituation und einer Eigengeschwindigkeit des Nutzfahrzeugs 1 aufweist. Die Berechnungseinheit 16 teilt dem Stereobild-Modul 10 auf Basis der Ausfahrweiten aₗₑ und aᵣᵢ sowie der bekannten Breite w des Aufliegers 3 die aktuelle Basisbreite b mit, die diese zur Berechnung des Stereobilds benötigt. Dabei wird die aktuelle Basisbreite b dem Stereobild-Modul 10 beispielsweise konstant oder periodisch mitgeteilt. Ferner steuert die Berechnungseinheit 16 motorisch ausfahrbare Halterungen 17.1, 17.2 der Kameras 4.1, 4.2, um die Ausfahrweiten aₗₑ und aᵣᵢ einzustellen.

Nach der Vermessungsanfrage kann vorgesehen sein, dass die motorisch ausfahrbaren Halterungen 17.1, 17.2 wieder eingefahren werden.

Ferner weist das rückwärtige Stereo-Modul 15 eine Winkel-Bestimmungseinheit 18 zur Bestimmung des Winkels α auf, um den der Auflieger 3 relativ zur Längsachse LA der Zugmaschine 2 um den Punkt P geschwenkt ist, wenn das Verhaltens- und Planungsmodul 13 eine Anfrage zur rückwärtigen Fernvermessung an das rückwärtige Stereo-Modul 15 stellt. Wenn der Absolutwert des Winkels α kleiner ist als ein maximaler Schwenkwinkel αₘₐₓ, dann wird das Stereobild-Modul 10 aktiviert. Wenn dies nicht der Fall ist, dann wird das Stereobild-Modul 10 deaktiviert.

Mittels der vorgeschlagenen Lösung kann eine Vermessung der rückwärtigen Verkehrssituation in einer Entfernung von beispielsweise bis zu 300 m oder mehr erfolgen. Als weitere Sensoren 9 können Lidare und/oder Radare unterstützend und fusionierend eingesetzt werden.

Die vorgeschlagene Lösung ermöglicht das Äquivalent eines Schulterblicks, bei dem vor einem Einfädeln und/oder Spurwechsel hinreichend weit zurückgeschaut wird, um eine Entfernung für ein sich näherndes Objekt abschätzen zu können. Dabei sollte möglichst auch die Relativgeschwindigkeit zwischen dem Ego-Fahrzeug und dem sich nähernden Objekt geschätzt werden. Hierzu eignet sich insbesondere ein Radarsensor, jedoch ist hierfür auch der Einsatz von Lidarsensoren möglich. Ferner sollte dabei bestimmt werden, auf welcher Fahrspur das sich nähernde Objekt unterwegs ist und ob dies für den geplanten Spurwechsel relevant ist.

### Bezugszeichenliste

- 1: Fahrzeug, Nutzfahrzeug
- 2: Zugmaschine
- 3: Auflieger
- 4.1: Kamera, linke Kamera
- 4.2: Kamera, rechte Kamera
- 5: Frustum
- 6: Stereo-Messbereich
- 7: toter Winkel
- 8: Vorrichtung
- 9: weiterer Sensor
- 10: Stereobild-Modul
- 11: Fusionsmodul
- 12: digitale Karte
- 13: Verhaltens- und Planungsmodul
- 14: Aktorikregelung
- 15: rückwärtiges Stereo-Modul
- 16: Berechnungseinheit
- 17.1: Halterung
- 17.2: Halterung
- 18: Winkel-Bestimmungseinheit

- a: seitlicher Abstand der Kamera
- aₗₑ: maximale Ausfahrweite
- αₘᵢₙ: minimaler Schwenkwinkel
- aᵣᵢ: maximale Ausfahrweite
- b: Basisbreite
- f: Brennweite
- E1: hintere Ecke
- E2: hintere Ecke
- F: Fahrtrichtung
- F1: Fokalpunkt der Kamera 4.1
- F2: Fokalpunkt der Kamera 4.2
- J: Schnittpunkt
- L: Länge
- LA: Längsachse
- P: Punkt
- w: Breite
- x: Länge
- x': Entfernung

- α: Winkel

## Patentansprüche

1. Vorrichtung (8) zum Betrieb eines Fahrzeugs (1), umfassend eine Zugmaschine (2) und mindestens einen Auflieger (3) oder Anhänger, wobei die Vorrichtung (8) eine linke Kamera (4.1) an einer linken Seite der Zugmaschine (2) und eine rechte Kamera (4.2) an einer rechten Seite der Zugmaschine (2) umfasst, deren Frustum (5) jeweils entgegen einer Fahrtrichtung (F) gerichtet ist und das Frustum (5) der jeweils anderen Kamera (4.1, 4.2) überschneidet, wobei eine Basisbreite (b) der Kameras (4.1, 4.2) größer einstellbar ist als eine Breite (w) des Aufliegers (3) oder Anhängers, wobei die Vorrichtung (8) zur Vermessung eines von beiden Kameras (4.1, 4.2) erfassten Stereo-Messbereichs (6) auf Basis von Bilddaten der Kameras (4.1, 4.2) mittels Triangulation konfiguriert ist, wobei die Vorrichtung (8) dazu konfiguriert ist, Spurwechsel des Fahrzeugs (1) zu planen und durch Ansteuern von Aktoren des Fahrzeugs (1) auszuführen, wenn eine Verkehrssituation im erfassten Stereo-Messbereich (6) dies zulässt,
wobei die Basisbreite (b) durch Ausfahren der Kameras (4.1, 4.2) auf mehr als 3 m einstellbar ist.

2. Vorrichtung (8) nach Anspruch 1,
**dadurch gekennzeichnet, dass** die Kameras (4.1, 4.2) zumindest bedarfsweise ausfahrbar an der Zugmaschine (2) angeordnet sind.

3. Vorrichtung (8) nach Anspruch 1 oder 2,
**dadurch gekennzeichnet, dass** die Kameras (4.1, 4.2) zum Empfang von Licht im sichtbaren Wellenlängenbereich und/oder im Infrarotbereich ausgebildet sind.

4. Vorrichtung (8) nach einem der vorhergehenden Ansprüche,
**dadurch gekennzeichnet, dass** mindestens ein weiterer Sensor (9) zur Beobachtung der Umgebung hinter dem Fahrzeug (1) vorgesehen ist, der als ein Radarsensor und/oder als ein Lidarsensor ausgebildet ist, wobei die Vorrichtung (8) dazu konfiguriert ist, Bilddaten der Kameras (4.1, 4.2) mit Daten des mindestens einen weiteren Sensors (9) zu fusionieren und der Planung und Ausführung von Spurwechseln zugrunde zu legen.

5. Verfahren zum Betrieb eines Fahrzeugs (1), insbesondere mittels einer Vorrichtung (8) nach einem der vorhergehenden Ansprüche, umfassend eine Zugmaschine (2) und mindestens einen Auflieger (3) oder Anhänger, wobei eine linke Kamera (4.1) an einer linken Seite der Zugmaschine (2) und eine rechte Kamera (4.2) an einer rechten Seite der Zugmaschine (2) vorgesehen ist, deren Frustum (5) jeweils entgegen einer Fahrtrichtung (F) gerichtet ist und das Frustum (5) der jeweils anderen Kamera (4.1, 4.2) überschneidet, wobei eine Basisbreite (b) der Kameras (4.1, 4.2) größer ist oder größer eingestellt wird als eine Breite (w) des Aufliegers (3) oder Anhängers, wobei auf Basis von Bilddaten der Kameras (4.1, 4.2) ein von beiden Kameras (4.1, 4.2) erfasster Stereo-Messbereich (6) mittels Triangulation vermessen wird, wobei Spurwechsel des Fahrzeugs (1) geplant und durch Ansteuern von Aktoren des Fahrzeugs (1) ausgeführt werden, wenn eine Verkehrssituation im erfassten Stereo-Messbereich (6) dies zulässt,
wobei ein Winkel (α) bestimmt wird, um den der Auflieger (3) oder Anhänger relativ zu einer Längsachse (LA) der Zugmaschine (2) geschwenkt ist, wobei die Triangulation durchgeführt wird, wenn der Absolutwert des Winkels (α) kleiner ist als ein vorgegebener maximaler Schwenkwinkel (αₘₐₓ), wobei anderenfalls die Triangulation und/oder ein Spurwechsel nicht durchgeführt werden/wird.

6. Verfahren nach Anspruch 5,
**dadurch gekennzeichnet, dass** zur Einschätzung, ob die Verkehrssituation einen Spurwechsel zulässt, im Stereo-Messbereich (6) sich nähernde Objekte, deren Entfernung vom Fahrzeug (1) und deren Trajektorie relativ zum Fahrzeug (1) ermittelt wird.

7. Verfahren nach Anspruch 6,
**dadurch gekennzeichnet, dass** ferner eine Relativgeschwindigkeit zwischen dem Fahrzeug (1) und dem sich nähernden Objekt geschätzt wird.

## Claims

1. A device (8) for operating a vehicle (1), comprising a tractor unit (2) and at least one semi-trailer (3) or trailer, the device (8) comprising a left-hand camera (4.1) on a left-hand side of the tractor unit (2) and a right-hand camera (4.2) on a right-hand side of the tractor unit (2), the frustum (5) of the right-hand camera (4.2) being focussed against a direction of travel (F) and intersecting with the frustum (5) of the other camera (4.1), it being possible to set a basic width (b) of the cameras (4.1, 4.2) to be greater than a width (W) of the semi-trailer (3) or the trailer, the device (8) being configured to measure a stereo measurement range (6) covered by both cameras (4.1, 4.2) by means of triangulation on the basis of image data from the cameras (4.1, 4.2), the device (8) being configured to plan lane changes of the vehicle (1) and to carry them out by initiating actors of the vehicle (1) when this is permitted by a traffic situation in the stereo measurement range (6) covered, it being possible to adjust the basic width (b) by extending the cameras (4.1, 4.2) to more than 3m.

2. A device (8) according to claim 1,
**characterised in that** the cameras (4.1, 4.2) are disposed on the tractor unit (2) at least such that they can be extended as required.

3. A device (8) according to claim 1 or 2,
**characterised in that** the cameras (4.1, 4.2) are designed to receive light in the visible wavelength range and/or in the infrared range.

4. A device (8) according to any one of the preceding claims,
**characterised in that** at least one further sensor (9) is provided for observing the environment behind the vehicle (1) and takes the form of a radar sensor and/or a LIDAR sensor, the device (8) being configured to merge image data from the cameras (4.1, 4.2) with data from the at least one further sensor (9) and to use it as a basis for planning and executing the lane changes.

5. A method for operating a vehicle (1), in particular by means of a device (8) according to any one of the preceding claims, comprising a tractor unit (2) and at least one semi-trailer (3) or trailer, a left-hand camera (4.1) being provided on a left-hand side of the tractor unit (2) and a right-hand camera (4.2) being provided on a right-hand side of the tractor unit (2), the frustum (5) of the right-hand camera (4.2) being focussed against a direction of travel (F) and intersecting with the frustum (5) of the other camera (4.1, 4.2), a basic width (b) of the cameras (4.1, 4.2) being greater or being set greater than a width (W) of the semi-trailer (3) or trailer, a stereo measurement range (6) covered by both cameras (4.1, 4.2) being measured by means of triangulation on the basis of image data from the cameras (4.1, 4.2), lane changes of the vehicle (1) being planned and being executed by initiating actors of the vehicle (1) when this is permitted by a traffic situation in the stereo measurement range (6) covered,
an angle (α) being determined about which the semi-trailer (3) or trailer is swivelled relative to a longitudinal axis (LA) of the tractor unit (2), the triangulation being carried out when the absolute value of the angle (α) is less than a predetermined maximum swivel angle (αₘₐₓ), failing which no triangulation or lane change is carried out.

6. A method according to claim 5,
**characterised in that**, in order to assess whether the traffic situation permits a lane change, approaching objects, their distance from the vehicle (1) and their trajectories in relation to the vehicle (1) in the stereo measurement range (6) are determined.

7. A method according to claim 6,
**characterised in that** a relative speed between the vehicle (1) and the approaching object is also assessed.

## Revendications

1. Dispositif (8) permettant de faire fonctionner un véhicule (1), comprenant un tracteur (2) et au moins une semi-remorque (3) ou une remorque, le dispositif (8) comprenant une caméra gauche (4.1) située sur un côté gauche du tracteur (2) et une caméra droite (4.2) située sur un côté droit du tracteur (2) dont le tronc (5) respectif est orienté à chaque fois dans le sens opposé au sens de marche (F) et recoupe le tronc (5) de l'autre caméra (4.1, 4.2) respective, dans lequel une largeur de base (b) des caméras (4.1, 4.2) pouvant être réglée à une valeur supérieure à une largeur (w) de la semi-remorque (3) ou de la remorque, dans lequel le dispositif (8) est configuré pour mesurer, par triangulation à partir des données d'image des deux caméras (4.1, 4.2), une zone de mesure stéréoscopique (6) détectée par les deux caméras, le dispositif (8) étant configuré pour planifier les changements de voie du véhicule (1) et les exécuter en commandant les actionneurs du véhicule (1) lorsque la circulation routière dans la zone de mesure stéréoscopique détectée (6) le permet, dans lequel la largeur de base (b) peut être réglée à plus de 3 m par déploiement des caméras (4.1, 4.2).

2. Dispositif (8) selon la revendication 1,
**caractérisé en ce que** les caméras (4.1, 4.2) sont disposées sur le tracteur (2) de manière à pouvoir être déployées au moins en cas de besoin.

3. Dispositif (8) selon la revendication 1 ou 2,
**caractérisé en ce que** les caméras (4.1, 4.2) sont conçues pour capter la lumière dans le domaine des longueurs d'onde visibles et/ou dans le domaine infrarouge.

4. Dispositif (8) selon l'une quelconque des revendications précédentes, **caractérisé en ce qu'**au moins un capteur supplémentaire (9) sert à surveiller l'environnement situé derrière le véhicule (1), lequel est conçu comme un capteur radar et/ou comme un capteur lidar, dans lequel le dispositif (8) est configuré pour fusionner les données d'image des caméras (4.1, 4.2) avec les données provenant de l'au moins un capteur supplémentaire (9) et de les prendre pour base pour la planification et l'exécution des changements de voie.

5. Procédé de fonctionnement d'un véhicule (1), notamment à l'aide d'un dispositif (8) selon l'une quelconque des revendications précédentes, comprenant un tracteur (2) et au moins une semi-remorque (3) ou une remorque, dans lequel une caméra gauche (4.1) étant disposée sur un côté gauche du tracteur (2) et une caméra droite (4.2) étant disposée sur un côté droit du tracteur (2), dont le tronc (5) est orienté respectivement dans le sens opposé au sens de circulation (F) et recoupe le tronc (5) de l'autre caméra (4.1, 4.2) respective, dans lequel une largeur de base (b) des caméras (4.1, 4.2) est supérieure ou est réglée pour être supérieure à une largeur (w) de la semi-remorque (3) ou de la remorque, dans lequel sur la base des données d'image provenant des caméras (4.1, 4.2), une zone de mesure stéréoscopique (6) détectée par les deux caméras (4.1, 4.2) est mesurée par triangulation, dans lequel les changements de voie du véhicule (1) sont planifiés et exécutés par la commande d'actionneurs du véhicule (1) lorsque la circulation routière dans la zone de mesure stéréoscopique (6) captée le permet,
dans lequel un angle (α) est déterminé selon lequel la semi-remorque (3) ou la remorque est pivotée par rapport à un axe longitudinal (LA) du tracteur (2), dans lequel la triangulation est effectuée lorsque la valeur absolue de l'angle (a) est inférieure à un angle de pivotement maximal prédéfini (αₘₐₓ), dans le cas contraire, la triangulation et/ou un changement de voie n'étant pas effectué(s).

6. Procédé selon la revendication 5,
**caractérisé en ce que**, pour évaluer si la circulation routière permet un changement de voie, dans la zone de mesure stéréo (6) sont détectés des objets qui s'approchent, leur distance par rapport au véhicule (1) et leur trajectoire par rapport au véhicule (1) étant déterminée.

7. Procédé selon la revendication 6,
**caractérisé en ce qu'**une vitesse relative entre le véhicule (1) et l'objet qui s'approche est en outre estimée.
